# EUROPEAN PATENT SPECIFICATION

(11) **EP 3 120 711 B1**
(45) Date of publication and mention of the grant of the patent: **30.01.2019**
(21) Application number: 16180652.6
(22) Date of filing: 21.07.2016
(51) Int. Cl.: A23L 27/00

(54) **FOOD SEASONING**
LEBENSMITTEL GEWÜRZ
ASSAISONNEMENT ALIMENTAIRE

(30) Priority: 21.07.2015 IT UB20152348
(43) Date of publication of application: 25.01.2017
(73) Proprietor: Bellini, Carlo, 41039 San Possidonio (MO) (IT)
(72) Inventor: Bellini, Carlo, 41039 San Possidonio (MO) (IT)
(74) Representative: Zoli, Filippo

(56) References cited:
- EP-A1- 1 231 257
- EP-A1- 1 325 952
- WO-A1-2013/050828
- WO-A1-2014/033761
- N N: "Red wine and balsamic vinegars", GNPD; MINTEL, 1 August 2006 (2006-08-01), XP002741733,

## Description

The present invention relates to a food seasoning and to a process for the production of same.

The need is particularly felt, in many sectors of industrial and craft activities, to renew products and find new ones in order to better distinguish the same from those of the competition.

This need is particularly felt in the food industry for the preparation and distribution of food seasonings intended for human consumption.

To meet the above requirement, various oil and/or vinegar based seasonings are known combined with different substances having properties that, on the one hand, can be flavoring and taste enhancing and, on the other hand, nutrient and healthful for man.

In this regard it is underlined that, besides the need to offer seasonings with a different taste than those of the competition, in this sector the search for seasonings having a great flavoring power is becoming more and more important and which, at the same time, are able to provide a relative well-being to the user, e.g. because they are able to integrate substances with a balanced nutritional provision and, more generally, beneficial effects on the human body.

Those requirements, however, often remain unfulfilled.

The products currently on the market, in actual fact, almost never succeed in combining the fact of being seasonings with a good taste and of providing well-being and, when they have beneficial properties for man, they usually have an unpleasant taste and flavor.

In some cases, moreover, these products have a high content of sucrose and fat and are not recommended for a balanced diet.

To obviate at least in part the aforesaid drawbacks, vinegar based food seasonings are known with added natural substances.

Such seasonings are described in document XP-002741733; also in this case, however, the prevailing presence of vinegar makes said seasoning unsatisfactory for the aforementioned users' needs.

Analogously, WO 2014/033761 discloses a food composition comprising balsamic vinegar of Modena IGP and tomato concentrate.

The main aim of the present invention is to provide a food seasoning which allows meeting the aforementioned requirements.

In particular, the object of the present invention is to provide a food seasoning that is palatable and tasty from the standpoint of flavor.

A further object of the present invention is to provide a food seasoning that is usable as a single seasoning instead of the traditional use of oil and vinegar.

Not the last object of the present invention is to provide a process for the production of a food seasoning that, in a practical, easy and functional manner, allows obtaining a seasoning having the aforementioned qualities.

Another object of the present invention is to provide a food seasoning and a relative production process which allow overcoming the above mentioned drawbacks of the prior art within the ambit of a simple, rational, easy, effective to use and affordable solution.

The objects stated above are achieved by the present food seasoning and relative production process having the characteristics of claim 1.

Other characteristics and advantages of the present invention will become better evident from the description of a preferred, but not exclusive, embodiment of a food seasoning and relative production process, illustrated by way of an indicative, but non-limiting, example in the accompanying drawings, wherein:

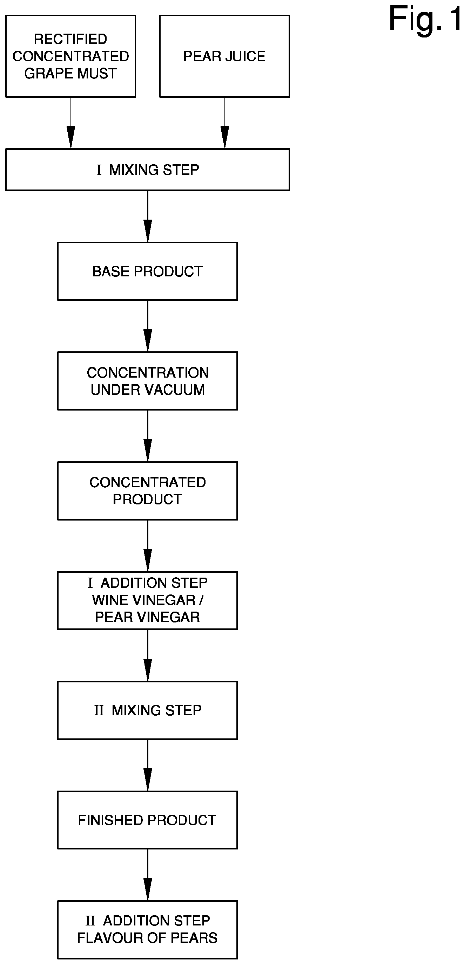

Figure 1 is a block diagram view that illustrates the process according to the invention.

The process shown in Figure 1 is intended for the production of a food seasoning which comprises a mixture of at least the following components:
- rectified concentrated grape must;
- concentrated pear juice; and
- at least one of wine vinegar, pear vinegar and apple vinegar.

Conveniently, the rectified concentrated grape must is the result of the concentration of grape must which is filtered and stabilized by means of the passage through ion exchange columns which remove impurities and leave only the sugars naturally present in the grapes.

In detail, according to the EU regulations, the rectified concentrated grape must is referred to as "no-caramelized liquid product obtained with any means of partial dehydration, with the exclusion of direct heat, coming from certain recommended or authorized varieties produced by the European Community, totally deprived of its ionic components".

The concentrated pear juice is the result of fruit squeezing wherein the juice forms the liquid part and is able to make the seasoning naturally sweet and aromatic.

In general, the term "vinegar" is used to refer to products obtained from acetic bioxidation of ethyl alcohol.

Preferably, all raw materials used in the formulation of this seasoning are of organic origin.

Furthermore, the presence of the concentrated pear juice considerably increases the phytochemical activity of the seasoning; this is due to the fact that the pear has a high content of polyphenolic substances belonging to the family of flavonoids such as e.g. anthocyanins, epicatechin and quercetin.

The concentrated pear juice also contains dietary fiber that promotes the maintenance and growth of bacterial flora, increases the feeling of satiety, slows down the absorption of sugars and accelerates intestinal transit.

Added to this is the fact that both pear vinegar and apple vinegar have a high content of polyphenolic compounds such as gallic acid, chlorogenic acid, catechin, epicatechin, caffeic acid, syringic and ferulic acid.

The addition of the vinegar selected from wine vinegar, pear vinegar and apple vinegar lowers the pH and increases therefore the stability of polyphenolic compounds present in the concentrated pear juice.

The mixture obtained by the union of the aforementioned components comprises rectified concentrated grape must, concentrated pear juice and at least one of wine vinegar, pear vinegar and apple vinegar, in the following concentrations of weight, evaluated against the total weight of the mixture:

| | |
|---|---|
| - rectified concentrated grape must | 25% - 40%; |
| - concentrated pear juice | 30% - 45%; and |
| - at least one of wine vinegar, pear vinegar and apple vinegar | 20% - 50%. |

Preferably, the mixture comprises rectified concentrated grape must, concentrated pear juice, and at least one of wine vinegar, pear vinegar and apple vinegar, in the following concentrations of weight, evaluated against the total weight of the mixture:

| | |
|---|---|
| - rectified concentrated grape must | 27% - 35%; |
| - concentrated pear juice | 33% - 42%; and |
| - at least one of wine vinegar, pear vinegar and apple vinegar | 23% - 40%. |

Advantageously, but not exclusively, the mixture may also comprise at least a flavor of natural and/or synthetic origin.

In detail, the aforementioned flavor is a flavor of pears and is present in a concentration of weight, evaluated against the total weight of the mixture, between 0.01% and 0.5%.

Conveniently, the mixture comprises the flavor of pears in the concentration of weight, evaluated against the total weight of the mixture, substantially equal to 0.05%.

Furthermore, the finished product has a density value of between 1.33 and 1.34 g/cc, a sugar concentration (g/100g) of between 75 g and 85 g and, in addition, a percentage value of acidity (expressed as w/V percentage concentration of acetic acid) of between 3.5% and 4.5%.

By way of a non-limiting example only, three embodiments are shown of production of the seasoning according to the invention.

### EXAMPLE 1

The mixture is obtained uniting the rectified concentrated grape must, concentrated pear juice and wine vinegar, in the following concentrations of weight, evaluated against the total weight of the mixture:

| | |
|---|---|
| - rectified concentrated grape must | 32% - 35%; |
| - concentrated pear juice | 40% - 43%; and |
| - wine vinegar | 23% - 26%. |

The table below shows the values obtained as a result of the chemical analysis of the above formulation.

| **Parameter** | **Values** | **Method** |
|---|---|---|
| pH (20°C) | 3.66 | OIV-MA-AS313-15 R2011 |
| Density (20/20°C) | 1.35223 | OIV-MA-AS2-01A R2012 |
| Total acidity (as acetic acid) | 2.46 g/100g | D.M. 12/03/86 SO G.U. n°161 14/07/86 All.p.to II |
| Total acidity (as tartaric acid) | 3.08 g/100g | D.M. 12/03/86 SO G.U. n°161 14/07/86 All.p.to II |
| Total phosphorus | 36 mg/Kg | OIV-Resolution OENO 58/2000+AP AT CNR IRSA 4110 A2 Man 29 2003 |
| Magnesium | 187 mg/Kg | D.M 12/03/86 XXXIII-IV Reg. CEE n.2676/90 |
| Nickel | 0.14 mg/Kg | D.M 12/03/86 XXXIII-IV Reg. CEE n.2676/90 |
| Potassium | 263 mg/Kg | D.M 12/03/86 XXXIII-IV Reg. CEE n.2676/90 |
| Copper | 0.21 mg/Kg | D.M 12/03/86 XXXIII-IV Reg. CEE n.2676/90 |
| Zinc | 2.03 mg/Kg | D.M 12/03/86 XXXIII-IV Reg. CEE n.2676/90 |
| Polyphenols (as catechin) | 207 mg/Kg | AL/O/025 Rev 001 03/09/2012 |

### EXAMPLE 2

The mixture is obtained uniting the rectified concentrated grape must, concentrated pear juice and apple vinegar, in the following concentrations of weight, evaluated against the total weight of the mixture:

| | |
|---|---|
| - rectified concentrated grape must | 28% - 31%; |
| - concentrated pear juice | 35% - 38%; and |
| - apple vinegar | 32% - 35%. |

### EXAMPLE 3

The mixture is obtained uniting the rectified concentrated grape must, concentrated pear juice and pear vinegar, in the following concentrations of weight, evaluated against the total weight of the mixture:

| | |
|---|---|
| - rectified concentrated grape must | 26% - 29%; |
| - concentrated pear juice | 32% - 35%; and |
| - pear vinegar | 39% - 42%. |

The simultaneous presence of concentrated pear juice to which is added the rectified concentrated grape must and at least one of wine vinegar, apple vinegar and pear vinegar greatly increases the content in polyphenols which is substantially equal to 207 mg/Kg.

Moreover, the chemical stability of the polyphenolic components of the concentrated pear juice is favored by low pH values; to this is added the fact that the presence of wine, pear or apple vinegar increases the acidity of the pear juice, helping to keep intact and active the phytochemical components having an organic action.

In particular, the combination of concentrated pear juice and at least one of wine vinegar, apple vinegar and pear vinegar boosts the nutritional and beneficial properties of the seasoning.

The process used for the production of such seasoning comprises at least a mixing step, even in separate steps and at different times, of at least the following components:
- rectified concentrated grape must;
- concentrated pear juice; and
- at least one of wine vinegar, pear vinegar and apple vinegar.

In particular, the mixing step comprises a first mixing step of the rectified concentrated grape must and of the concentrated pear juice to obtain a base product.

During the first mixing step, the rectified concentrated grape must and the concentrated pear juice are mixed together for a time comprised between 40 min and 60 min, in the following volume percentages, evaluated against the final volume of the base product:

| | |
|---|---|
| - rectified concentrated grape must | 38% - 52%; |
| - concentrated pear juice | 46% - 64%. |

It is useful to point out that in the present discussion by "volume percentage" are meant the milliliters (ml) of solute dissolved in 100 milliliters of solution.

Preferably, in the first mixing step, the rectified concentrated grape must and the concentrated pear juice are present in the following volume percentages, evaluated against the final volume of the base product:

| | |
|---|---|
| - rectified concentrated grape must | 42% - 48%; |
| - concentrated pear juice | 52% - 58%. |

During the first mixing step, the rectified concentrated grape must and the concentrated pear juice are present in the following volume percentages, evaluated against the final volume of the base product:

| | |
|---|---|
| - rectified concentrated grape must | 45%; |
| - concentrated pear juice | 55%. |

In particular, the concentrated pear juice used in the aforementioned step is in a concentrated form and has a density of between 69° Brix and 72° Brix.

After mixing the aforementioned components together, the process continues with a concentration step of the base product to obtain a concentrated product.

The concentration step is performed at a temperature comprised between 30°C and 37°C.

Advantageously, the concentration step is performed under vacuum at a pressure value substantially equal to 0.9697 bar. In detail, the concentration step is performed by means of a PLC system which allows constant monitoring of the process parameters, like precisely pressure, temperature and density.

The concentrated product thus obtained has a total percentage concentration comprised between 70°Brix and 100°Brix and preferably between 80°Brix and 90°Brix.

Preferably, the concentrated product has a total percentage concentration comprised between 84°Brix and 86°Brix.

It is convenient to point out that in the ambit of the present discussion, "Brix" identifies a unit of measurement of the quantity of solid substance dissolved in a liquid.

Afterwards, the process comprises a first addition step of at least one of wine vinegar, pear vinegar and apple vinegar to the concentrated product.

Advantageously, the first addition step is performed under vacuum.

The process continues with a second mixing step of the concentrated product with at least one of wine vinegar, pear vinegar and apple vinegar subsequent to first addition step, to obtain a finished product.

Conveniently, the finished product has a total percentage concentration comprised between 57°Brix and 79°Brix, and preferably between 64°Brix and 72°Brix.

In a preferred embodiment, the finished product has a total percentage concentration substantially equal to 68°Brix.

This value corresponds to a high content of solutes that make the palatability of the seasoning particularly gentle and pleasant, favoring adherence to foods and the relative flavoring power.

Preferably, but not exclusively, the process comprises a second addition step of at least a natural and/or synthetic flavor in the percentage of volume, evaluated against the total volume of the finished product, comprised between 0.01% and 0.5% and preferably equal to 0.05%.

Finally, the mixture obtained at the end of the second mixing step or of the second addition step is subjected to a storage step in food-grade containers kept at an ambient temperature comprised between 5°C and 35°C. Nevertheless, in the absence of the above environmental temperature conditions, the storage step takes place inside a refrigeration cell.

Next, the mixture obtained is subjected to bottling and shipping, before its final introduction on the market.

It has in practice been found that the described invention achieves the intended objects.

It is emphasized that the particular solution of adding at least one of wine vinegar, apple vinegar or pear vinegar to concentrated pear juice allows obtaining a food seasoning that is pleasant and tasty from the standpoint of flavor and, moreover, is usable as a single seasoning instead of traditional oil and vinegar.

Moreover, the synergistic presence of at least one of wine vinegar, pear vinegar and apple vinegar combined to concentrated pear juice allows using the seasoning to which the present invention relates, in place of seasonings based on animal fats, thus greatly decreasing the relative contribution of saturated fatty acids and therefore reducing the risk of occurrence of cardiovascular diseases.

To this is added the fact that the combination of these components allows realizing a salt-free seasoning, thus greatly reducing the risk of arterial hypertension.

Finally, the high concentration of polyphenolic substances with antioxidant action present in the concentrated pear juice decreases the risk associated to the onset of chronic degenerative diseases.

## Claims

1. Food seasoning, **characterized by** the fact that it comprises a mixture of at least the following components: rectified concentrated grape must, concentrated pear juice, at least one of wine vinegar, pear vinegar and apple vinegar in the following concentrations of weight, evaluated against the total weight of the mixture:
| | |
|---|---|
| - rectified concentrated grape must | 25% ÷ 40%; |
| - concentrated pear juice | 30% ÷ 45%; and |
| - at least one of wine vinegar, pear vinegar and apple vinegar | 20% ÷ 50%. |

2. Seasoning according to claim 1, **characterized by** the fact that said mixture comprises said rectified concentrated grape must, said concentrated pear juice and at least one of said wine vinegar, said pear vinegar and said apple vinegar, in the following concentrations of weight, evaluated against the total weight of the mixture:
| | |
|---|---|
| - rectified concentrated grape must | 27% ÷ 35%; |
| - concentrated pear juice | 33% ÷ 42%; and |
| - at least one of wine vinegar, pear vinegar and apple vinegar | 23% ÷ 40%. |

3. Seasoning according to one or more of the preceding claims, **characterized by** the fact that said mixture comprises said rectified concentrated grape must, said concentrated pear juice and said wine vinegar, in the following concentrations of weight, evaluated against the total weight of the mixture:
| | |
|---|---|
| - rectified concentrated grape must | 32% ÷ 35%; |
| - concentrated pear juice | 40% ÷ 43%; and |
| - wine vinegar | 23% ÷ 26%. |

4. Seasoning according to one or more of the preceding claims, **characterized by** the fact that said mixture comprises said rectified concentrated grape must, said concentrated pear juice and said apple vinegar, in the following concentrations of weight, evaluated against the total weight of the mixture:
| | |
|---|---|
| - rectified concentrated grape must | 28% ÷ 31%; |
| - concentrated pear juice | 35% ÷ 38%; and |
| - apple vinegar | 32% ÷ 35%. |

5. Seasoning according to one or more of the preceding claims, **characterized by** by the fact that said mixture comprises said rectified concentrated grape must, said concentrated pear juice and said pear vinegar, in the following concentrations of weight, evaluated against the total weight of the mixture:
| | |
|---|---|
| - rectified concentrated grape must | 26% - 29%; |
| - concentrated pear juice | 32% - 35%; and |
| - pear vinegar | 39% - 42%. |

6. Seasoning according to one or more of the preceding claims, **characterized by** the fact that said mixture comprises at least a flavor of natural and/or synthetic origin.

7. Process for the production of a food seasoning, **characterized by** the fact that it comprises at least a mixing step, also in separate steps and at different times, at least of the following components:
- rectified concentrated grape must;
- concentrated pear juice; and
- at least one of wine vinegar, pear vinegar and apple vinegar;
in which said mixing step comprises a first mixing step of at least said rectified concentrated grape must and said concentrated pear juice, to obtain a base product, said rectified concentrated grape must and said concentrated pear juice being mixed together for a time comprised between 40 min and 60 min, in the following volume percentages, evaluated against the final volume of the base product:
| | |
|---|---|
| - rectified concentrated grape must | 38% - 52%; |
| - concentrated pear juice | 46% - 64%. |

8. Process according to claim 7, **characterized by** the fact that said first mixing step comprises said rectified concentrated grape must and said concentrated pear juice in the following volume percentages, evaluated against the final volume of the base product:
| | |
|---|---|
| - rectified concentrated grape must | 42% - 48%; |
| - concentrated pear juice | 52% - 58%. |

9. Process according to claim 8, **characterized by** the fact that it comprises a concentration step of said base product, to obtain a concentrated product, performed under vacuum and at a temperature comprised between 30°C and 37°C.

10. Process according to claim 9, **characterized by** the fact that said concentration step is performed until obtaining a total percentage concentration of said concentrated product comprised between 70°Brix and 100°Brix, and preferably between 80°Brix and 90°Brix.

11. Process according to claim 10, **characterized by** the fact that it comprises a first addition step of at least one of wine vinegar, pear vinegar and apple vinegar to said concentrated product.

12. Process according to claim 11, **characterized by** the fact that it comprises, subsequently to said first addition step, at least a second mixing step of said concentrated product with at least one of said added wine vinegar, said pear vinegar and said apple vinegar, to obtain a finished product.

13. Process according to claim 12, **characterized by** the fact that said second mixing step is performed until obtaining a total percentage concentration of said finished product comprised between 57°Brix and 79°Brix, and preferably between 64°Brix and 72°Brix.

## Patentansprüche

1. Lebensmittelgewürz, **dadurch gekennzeichnet, dass** es eine Mischung aus mindestens den folgenden Bestandteilen enthält: rektifizierter konzentrierter Traubenmost, konzentrierter Birnensaft, mindestens einer aus Weinessig, Birnenessig und Apfelessig in den folgenden Gewichtskonzentrationen, bezogen auf das Gesamtgewicht der Mischung:
- rektifizierter konzentrierter Traubenmost 25 % - 40 %;
- konzentrierter Birnensaft 30 % - 45 %; und
- mindestens einer aus Weinessig, Birnenessig und Apfelessig 20 % - 50%.

2. Gewürz nach Anspruch 1, **dadurch gekennzeichnet, dass** die Mischung den rektifizierten konzentrierten Traubenmost, den konzentrierten Birnensaft und mindestens einen aus dem Weinessig, Birnenessig und Apfelessig in den folgenden Gewichtskonzentrationen, bezogen auf das Gesamtgewicht der Mischung, enthält:
- rektifizierter konzentrierter Traubenmost 27 % - 35 %;
- konzentrierter Birnensaft 33 % - 42 %; und
- mindestens einer aus Weinessig, Birnenessig und Apfelessig 23 % - 40%.

3. Gewürz nach einem oder mehreren der vorhergehenden Ansprüche, **dadurch gekennzeichnet, dass** die Mischung den rektifizierten konzentrierten Traubenmost, den konzentrierten Birnensaft und den Weinessig in den folgenden Gewichtskonzentrationen, bezogen auf das Gesamtgewicht der Mischung, enthält:
- rektifizierter konzentrierter Traubenmost 32 % - 35 %;
- konzentrierter Birnensaft 40 % - 43 %; und
- Weinessig 23 % - 26 %.

4. Gewürz nach einem oder mehreren der vorhergehenden Ansprüche, **dadurch gekennzeichnet, dass** die Mischung den rektifizierten konzentrierten Traubenmost, den konzentrierten Birnensaft und den Apfelessig in den folgenden Gewichtskonzentrationen, bezogen auf das Gesamtgewicht der Mischung, enthält:
- rektifizierter konzentrierter Traubenmost 28 % - 31 %;
- konzentrierter Birnensaft 35 % - 38 %; und
- Apfelessig 32 % - 35 %.

5. Gewürz nach einem oder mehreren der vorhergehenden Ansprüche, **dadurch gekennzeichnet, dass** die Mischung den rektifizierten konzentrierten Traubenmost, den konzentrierten Birnensaft und den Birnenessig in den folgenden Gewichtskonzentrationen, bezogen auf das Gesamtgewicht der Mischung, enthält:
- rektifizierter konzentrierter Traubenmost 26 % - 29 %;
- konzentrierter Birnensaft 32 % - 35 %; und
- Birnenessig 39 % - 42 %.

6. Gewürz nach einem oder mehreren der vorhergehenden Ansprüche, **dadurch gekennzeichnet, dass** die Mischung mindestens ein Aroma natürlichen und/oder synthetischen Ursprungs enthält.

7. Verfahren zur Herstellung eines Lebensmittelgewürzes, **dadurch gekennzeichnet, dass** es mindestens einen Schritt zum Mischen, auch in separaten Schritten und zu unterschiedlichen Zeiten, mindestens der folgenden Bestandteile enthält:
- rektifizierter konzentrierter Traubenmost;
- konzentrierter Birnensaft; und
- mindestens einer aus Weinessig, Birnenessig und Apfelessig;
wobei der Schritt zum Mischen einen ersten Schritt zum Mischen mindestens des rektifizierten konzentrierten Traubenmosts und des konzentrierten Birnensafts enthält, um ein Basisprodukt zu erhalten, wobei der rektifizierte konzentrierte Traubenmost und der konzentrierte Birnensaft für einen Zeitraum zwischen 40 Min. und 60 Min. in den folgenden Volumenprozentanteilen, bezogen auf das Endvolumen des Basisprodukts, miteinander vermischt werden:
- rektifizierter konzentrierter Traubenmost 38 % - 52 %;
- konzentrierter Birnensaft 46 % - 64 %.

8. Verfahren nach Anspruch 7, **dadurch gekennzeichnet, dass** der erste Schritt zum Mischen den rektifizierten konzentrierten Traubenmost und den konzentrierten Birnensaft in den folgenden Volumenprozentanteilen, bezogen auf das Endvolumen des Basisprodukts, enthält:
- rektifizierter konzentrierter Traubenmost 42 % - 48 %;
- konzentrierter Birnensaft 52 % - 58 %.

9. Verfahren nach Anspruch 8, **dadurch gekennzeichnet, dass** es einen Schritt zum Konzentrieren des Basisprodukts enthält, um ein konzentriertes Produkt zu erhalten, der unter Vakuum und bei einer Temperatur zwischen 30 °C und 37 °C durchgeführt wird.

10. Verfahren nach Anspruch 9, **dadurch gekennzeichnet, dass** der Schritt zum Konzentrieren durchgeführt wird, bis eine prozentuale Gesamtkonzentration des konzentrierten Produkts zwischen 70°Brix und 100°Brix und vorzugsweise zwischen 80°Brix und 90°Brix erhalten wird.

11. Verfahren nach Anspruch 10, **dadurch gekennzeichnet, dass** es einen ersten Schritt zum Zugeben von mindestens einem aus Weinessig, Birnenessig und Apfelessig zu dem konzentrierten Produkt enthält.

12. Verfahren nach Anspruch 11, **dadurch gekennzeichnet, dass** es, nach dem ersten Schritt zum Zugeben mindestens einen zweiten Schritt zum Mischen des konzentrierten Produkts mit mindestens einem aus dem hinzugefügten Weinessig, dem Birnenessig und dem Apfelessig enthält, um ein Endprodukt zu erhalten.

13. Verfahren nach Anspruch 12, **dadurch gekennzeichnet, dass** der zweite Schritt zum Mischen durchgeführt wird, bis eine prozentuale Gesamtkonzentration des Endprodukts zwischen 57°Brix und 79°Brix und vorzugsweise zwischen 64°Brix und 72°Brix erhalten wird.

## Revendications

1. Assaisonnement alimentaire, **caractérisé en ce qu'**il comprend un mélange d'au moins l'un des composants suivants : des moûts de raisins concentrés rectifiés, du jus concentré de poire, au moins l'un parmi du vinaigre de vin, du vinaigre de poire et du vinaigre de pomme dans les concentrations en poids suivantes, évaluées par rapport au poids total du mélange :
| | |
|---|---|
| - moûts de raisins concentrés rectifiés | 25 % - 40 % ; |
| - jus concentré de poire | 30 % - 45 % ; et |
| - au moins l'un parmi du vinaigre de vin, du vinaigre de poire et du vinaigre de pomme | 20 % - 50 %. |

2. Assaisonnement alimentaire selon la revendication 1, **caractérisé en ce que** ledit mélange comprend lesdits moûts de raisins concentrés rectifiés, ledit jus concentré de poire et au moins l'un parmi ledit vinaigre de vin, ledit vinaigre de poire et ledit vinaigre de pomme, dans les concentrations en poids suivantes, évaluées par rapport au poids total du mélange :
| | |
|---|---|
| - moûts de raisins concentrés rectifiés | 27 % - 35 % ; |
| - jus concentré de poire | 33 % - 42 % ; et |
| - au moins l'un parmi du vinaigre de vin, du vinaigre de poire et du vinaigre de pomme | 23 % - 40 %. |

3. Assaisonnement alimentaire selon l'une quelconque des revendications précédentes, **caractérisé en ce que** ledit mélange comprend lesdits moûts de raisins concentrés rectifiés, ledit jus concentré de poire et ledit vinaigre de vin, dans les concentrations en poids suivantes, évaluées par rapport au poids total du mélange :
| | |
|---|---|
| - moûts de raisins concentrés rectifiés | 32 % - 35 % ; |
| - jus concentré de poire | 40 % - 43 % ; et |
| - vinaigre de vin | 23 % - 26 %. |

4. Assaisonnement alimentaire selon l'une quelconque des revendications précédentes, **caractérisé en ce que** ledit mélange comprend lesdits moûts de raisins concentrés rectifiés, ledit jus concentré de poire et ledit vinaigre de pomme, dans les concentrations en poids suivantes, évaluées par rapport au poids total du mélange :
| | |
|---|---|
| - moûts de raisins concentrés rectifiés | 28 % - 31 % ; |
| - jus concentré de poire | 35 % - 38 % ; et |
| - vinaigre de pomme | 32 % - 35 %. |

5. Assaisonnement alimentaire selon l'une quelconque des revendications précédentes, **caractérisé en ce que** ledit mélange comprend lesdits moûts de raisins concentrés rectifiés, ledit jus concentré de poire et ledit vinaigre de poire, dans les concentrations en poids suivantes, évaluées par rapport au poids total du mélange :
| | |
|---|---|
| - moûts de raisins concentrés rectifiés | 26 % - 29 % ; |
| - jus concentré de poire | 32 % - 35 % ; et |
| - vinaigre de poire | 39 % - 42%. |

6. Assaisonnement alimentaire selon l'une quelconque des revendications précédentes, **caractérisé en ce que** ledit mélange comprend au moins un arôme d'origine naturelle et/ou artificielle.

7. Procédé de production d'un assaisonnement alimentaire, **caractérisé en ce qu'**il comprend au moins une étape de mélange, aussi en plusieurs étapes et à des moments différents, au moins l'un des composants suivants :
- moûts de raisins concentrés rectifiés ;
- jus concentré de poire ; et
- au moins l'un parmi du vinaigre de vin, du vinaigre de poire et du vinaigre de pomme ;
dans lequel ladite étape de mélange comprend une première étape de mélange au moins desdits moûts de raisins concentrés rectifiés et dudit jus concentré de poire, pour obtenir un produit de base, lesdits moûts de raisins concentrés rectifiés et ledit jus concentré de poire étant mélangés ensemble pour une durée comprise entre 40 min et 60 min, dans les pourcentages de volume suivants, évalués par rapport au volume final du produit de base :
| | |
|---|---|
| - moûts de raisins concentrés rectifiés | 38 % - 52 % ; |
| - jus concentré de poire | 46 % - 64 %. |

8. Procédé selon la revendication 7, **caractérisé en ce que** ladite première étape de mélange comprend lesdits bouts de raisins concentrés rectifiés et ledit jus concentré de poire dans les pourcentages de volume suivants, évalués par rapport au volume final du produit de base :
| | |
|---|---|
| - moûts de raisins concentrés rectifiés | 42 % - 48 % ; |
| - jus concentré de poire | 52 % - 58 %. |

9. Procédé selon la revendication 8, **caractérisé en ce qu'**il comprend une étape de concentration dudit produit de base, pour obtenir un produit concentré, réalisée sous vide et à une température comprise entre 30°C et 37°C.

10. Procédé selon la revendication 9, **caractérisé en ce que** ladite étape de concentration est réalisée jusqu'à obtenir une concentration en pourcentage totale dudit produit concentré comprise entre 70°Brix et 100°Brix, et de préférence entre 80°Brix et 90°Brix.

11. Procédé selon la revendication 10, **caractérisé en ce qu'**il comprend une première étape d'ajout d'au moins l'un parmi du vinaigre de vin, du vinaigre de poire et du vinaigre de pomme audit produit concentré.

12. Procédé selon la revendication 11, **caractérisé en ce qu'**il comprend, après ladite première étape d'ajout, au moins une deuxième étape de mélange dudit produit concentré avec au moins l'un parmi les desdits vinaigre de vin, vinaigre de poire et vinaigre de pomme, pour obtenir un produit fini.

13. Procédé selon la revendication 12, **caractérisé en ce que** ladite deuxième étape de mélange est réalisée jusqu'à obtenir une concentration en pourcentage totale dudit produit fini comprise entre 57°Brix et 79°Brix, et de préférence entre 64°Brix et 72°Brix.
